# EUROPEAN PATENT SPECIFICATION

(11) **EP 1 245 850 B1**
(45) Date of publication and mention of the grant of the patent: **04.08.2004**
(21) Application number: 02076307.4
(22) Date of filing: 02.04.2002
(51) Int. Cl.: F16D 13/75

(54) **Clutch control apparatus**
Kupplungsteuereinrichtung
Système de commande d'un embrayage

(30) Priority: 29.03.2001 JP 2001097109
(43) Date of publication of application: 02.10.2002
(73) Proprietor: Aisin Seiki Kabushiki Kaisha, Kariya-shi, Aichi-ken (JP)
(72) Inventor: Maki, Naoyuki, Kariya-shi, Aichi-ken (JP)
(74) Representative: Marshall, John Grahame

(56) References cited:
- EP-A- 1 103 737
- DE-A- 19 834 961
- US-A- 5 494 143

## Description

### FIELD OF THE INVENTION

This invention generally relates to a clutch wear adjusting mechanism in a clutch control apparatus provided with a clutch for a torque transmitting between a driving power source (e.g. an internal combustion engine) and a transmission for use in a vehicle. The adjusting mechanism compensates for abrasion of a clutch facing.

### BACKGROUND OF THE INVENTION

Generally speaking, a known clutch control apparatus is provided with a clutch including a diaphragm spring of which posture is varied corresponding to the extent of abrasion on a clutch facing (a clutch disc). Therefore, when the clutch facing is abraded in response to repeated engagement and disengagement of the clutch, an operational force required for establishing a disengagement condition of the clutch, i.e. load applied to a clutch cover is increased.

This type of clutch control apparatus is disclosed in, for example, Japanese patent application published as Toku-Kai-Hei 5 (1993)-215150. A height of a fulcrum of a diaphragm spring is changed corresponding to a load applied to a clutch cover upon an operation of a clutch, i.e. corresponding to a load applied to the diaphragm spring held by the clutch cover upon the operation of the clutch. Therefore, a posture of the diaphragm spring can be modified. Further, the disclosed clutch control apparatus can compensate for variation of load characteristics of the clutch due to the abrasion of the clutch facing.

However, the load applied to the clutch cover may be fluctuated due to resonance of the clutch cover generated in response to vehicle vibration during the vehicle being driven. Therefore, the abrasion of the clutch facing may not be compensated with high accuracy.

Accordingly, the above disclosed clutch control apparatus is still susceptible of certain improvements with respect to compensating for the abrasion of the clutch facing with high accuracy.

A clutch wear adjusting mechanism is disclosed in our own EP-A-1103737 which was unpublished at the priority date of this application. EP-A-1103737 discloses a wear compensating mechanism capable of precisely compensating for wear of a clutch disc in use. A toothed element, referred to in EP-A-1103737 as an adjusting pinion, selectively engages teeth of an inclined rack and by engaging successive teeth of the rack can be caused to climb up the incline and so close the spacing between a pressure plate and a flywheel of the clutch in use so as to compensate for wear. The mechanism is however difficult to assemble and the present invention seeks to improve on that mechanism.

Another proposal is DE-A-19834961 which discloses a clutch wear adjusting mechanism, according to the preamble of claim 1.

### SUMMARY OF THE INVENTION

The invention provides a clutch assembly and wear adjusting mechanism as set forth in claim 1.

According to the invention, the adjusting mechanism changes the distance between the diaphragm spring and the pressure plate. Therefore, assuming that the predetermined condition is a vehicle driving condition generating little or no resonance of the clutch, the clutch abrasion compensation can be performed with high accuracy.

Furthermore, according to the invention, when the predetermined condition is satisfied, a posture of the diaphragm spring may be continuously varied after the axial movement of the pressure plate is restrained. The adjustment wedge member is moved up the taper surface to vary the separation between the diaphragm spring and the pressure plate. The adjusting mechanism is provided with the rack mechanism to achieve that movement of the adjustment wedge member. Therefore, the engagement between the rack engagement teeth and the rack teeth is fully released when the axial moving amount of the adjustment wedge member relative to the pressure plate becomes greater than a fixed displacement amount plus an additional axial displacement amount required for fully releasing the engagement between the rack engagement teeth and the rack teeth. When the rack engagement teeth become disengaged from the rack teeth, the rack is allowed to be displaced in the axial and circumferential directions. A biasing member preferably slidably moves the rack cam teeth in a direction away from the pressure plate, and the rack is then biased in the circumferential direction by cam teeth on a side of the rack opposite to the side carrying the rack teeth and cooperating cam teeth of a cam means fixed to the taper surface. In this case, the rack teeth has been displaced in the circumferential direction relative to the rack engagement teeth.

To achieve the above condition, the posture of the diaphragm spring had been varied in a direction for engaging the clutch. That is, when the rack engagement member is moved in the axial direction following the operation of the end portion at the outer peripheral portion of the diaphragm spring, the selection of the rack teeth which are engaged with the rack engagement teeth is shifted from the condition before the predetermined condition is satisfied. When the clutch is moved to a fully disengaged condition by varying the posture of the diaphragm spring from the above described condition, the adjustment wedge member and the taper portion is relative rotated in a circumferential direction via a rack. Therefore, a contact condition between the wedge side taper surface of the adjustment wedge member and the taper surface of the taper portion is varied. Further, the axial distance between the adjustment wedge member and the pressure plate under the clutch being engaged is varied. Therefore, the axial distance between the diaphragm spring and the pressure plate is varied, wherein the clutch abrasion can be compensated.

As described above, upon compensating the clutch abrasion, the rack is first relatively rotated in the circumferential direction by a predetermined circumferential displacement amount by the biasing means. When the clutch is engaged again, the selection of the rack teeth to be engaged with the rack engagement teeth is shifted. Therefore, the adjustment wedge member and the taper portion are relatively rotated. Therefore, the axial distance between the diaphragm spring and the pressure plate can be varied in response to the operation of the actuator even when there is rust between each component or when sliding resistance is large. Therefore, the clutch abrasion can be compensated with high reliability.

Preferably the axial and lateral movement of the rack is constrained and limited by a restraining portion. The restrained amount is preferably preset to be within a range between half a pitch of a tooth surface of the rack teeth and a pitch thereof. The rack engagement teeth to be engaged with the rack teeth after the predetermined condition is satisfied is shifted by one pitch relative to the rack engagement teeth to be engaged with the rack teeth before the predetermined condition is satisfied, the shift being in a direction for enlarging the axial distance between the diaphragm spring and the pressure plate. The height of the taper surface corresponding to one pitch of the rack teeth can be varied so that delicate clutch abrasion can be compensated.

Advantageously when the predetermined condition is satisfied, the axial moving amount of the adjustment wedge member relative to the pressure plate is set to be equal to or greater than a displacement amount in which the axial displacement amount required for fully releasing the engagement between the rack engagement teeth and the rack teeth plus the axial displacement amount of the rack permitted before restraint by the restraining portion. When the predetermined condition is satisfied, the engagement between the rack engagement teeth and the rack teeth is fully released regardless of the biasing force of the biasing member. The selection of the rack teeth to be engaged with the rack engagement teeth is shifted from the selection before the predetermined condition is satisfied. Therefore, delicate clutch abrasion can be compensated and the clutch abrasion can be firmly compensated.

### BRIEF DESCRIPTION OF THE DRAWING FIGURES

The foregoing and additional features and characteristics of the present invention will become more apparent from the following detailed description considered with reference to the accompanying drawing figures wherein:
Fig. 1 is a block view schematically illustrating an entire clutch control apparatus of an embodiment of the present invention;
Fig. 2 is a cross-sectional view of a clutch illustrated in Fig. 1;
Fig. 3 is a front view of the clutch illustrated in Fig. 1 provided with an adjusting mechanism, in which the front view is partially opened;
Fig. 4 is a side view illustrating a structure of the adjusting mechanism illustrated in Fig. 3;
Fig. 5 is a cross sectional view of the adjusting mechanism when the clutch is under an engaged condition ;
Fig. 6 is a cross sectional view of a structure for holding a diaphragm spring when the clutch is under the engaged condition;
Fig. 7 (A), (B), (C), (D) are side views illustrating a structure of the adjusting mechanism and an operation thereof;
Figs 8 (A), (B), (C) are diagrams for showing a principle for detecting an abrasion amount,
Fig. 9 is a flow chart illustrating a program performed by a CPU illustrated in Fig. 1, in which the CPU detects whether or not an adjusting operation is required at a predetermined time basis; and
Fig. 10 is a flow chart illustrating another program for the adjusting operation performed by the CPU illustrated in Fig. 1.

### DETAILED DESCRIPTION OF THE INVENTION

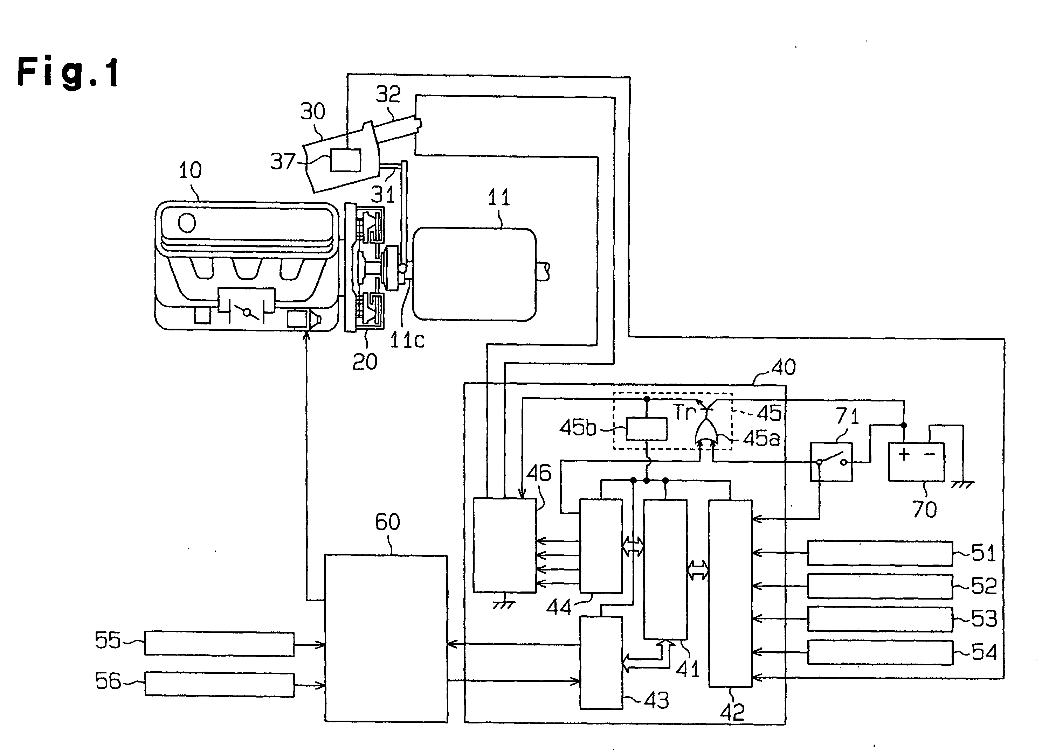

Referring to Fig. 1, a clutch control apparatus according to an embodiment of the present invention is employed for controlling engagement and disengagement of a friction clutch 20 disposed between an engine 10 (driving power source) and a transmission 11. The clutch control apparatus is provided with an actuator 30, a clutch cover 22 fixed to a fly wheel 21 integrally rotated with an output shaft of the engine 10, a clutch control circuit 40, and an adjusting mechanism. The actuator 30 is employed for moving a clutch disc 23 facing the fly wheel 21 in forward and rearward directions via a pressure plate 24 and a diaphragm spring 25. The actuator 30 is further employed for applying force changing an engaged condition of the clutch disc 23 to the diaphragm spring 25. The clutch control circuit 40 is employed as a control means for outputting a driving command signal to the actuator 30 so as to control the operation of the actuator 30 based upon the signal. The adjusting mechanism produces a transmitting circuit of force between the pressure plate 24 and the diaphragm spring 25 and changes a distance between the pressure plate 24 and the diaphragm spring 25 in an axial direction thereof.

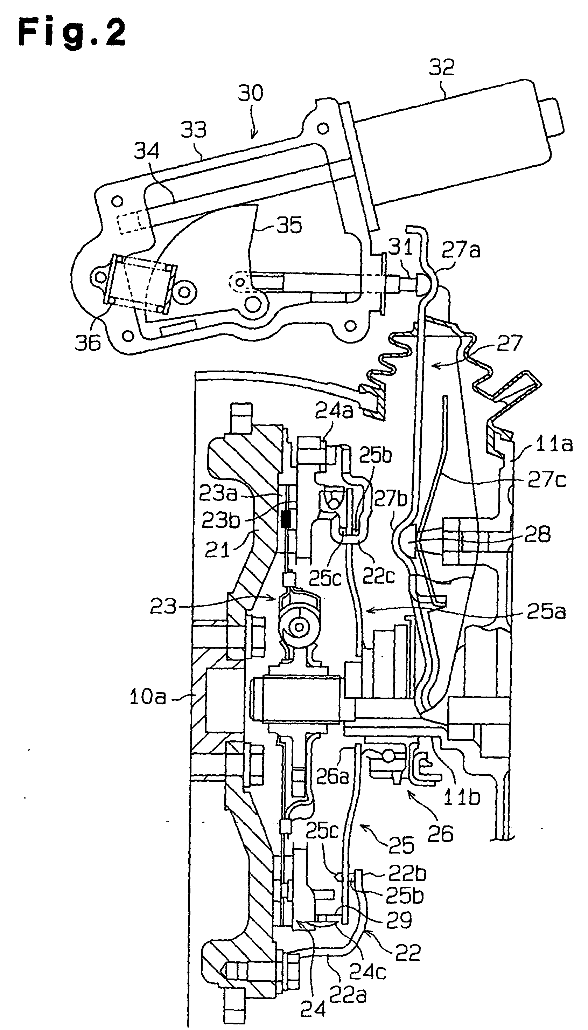

As described above, the friction clutch 20 is provided with the fly wheel 21, the clutch cover 22, the clutch disc 23, the pressure plate 24, the diaphragm spring 25. Referring to Fig. 2, the friction clutch 20 is further provided with a release bearing 26, a release fork 27, a pivot supporting member 28 fixed to a transmission case 11 a, and an adjustment wedge member 82.

The fly wheel 21 is in a circular disc shaped structure and is fixedly connected to a crank shaft 10a (the output shaft of the driving power source) of the engine 10 by means of a bolt. Therefore, the fly wheel 21 is rotated integrally with the crank shaft 10a.

The clutch cover 22 is in an approximately cylindrical structure and is provided with a cylindrical portion 22a, a flange portion 22b formed at an inner peripheral side of the cylindrical portion 22a, and plural fulcrum forming portions 22c formed at the inner peripheral edge of the cylindrical portion 22a. The plural fulcrum forming portions 22c are arranged with equal spaced therebetween in a circumferential direction. The clutch cover 22 is fixedly connected to the fly wheel 21 at an outer peripheral portion of the cylindrical portion 22a by means of a volt so as to be rotated integrally with the fly wheel 21.

The clutch disc 23 is a friction plate for transmitting driving power of the engine 10 to the transmission 11. The clutch disc 23 is disposed between the fly wheel 21 and the pressure plate 24. A central portion of the clutch disc 23 is spline-engaged with an input shaft of the transmission 11 so that the clutch disc 23 can be moved in an axial direction thereof. Clutch facings 23a, 23b (frictional member) are fixed to both surfaces at outer peripheral portions of the clutch disc 23 by means of a rivet.

The pressure plate 24 applies a pushing force thereof to the clutch disc 23 in a direction of the fly wheel 21 so as to frictionally engage the clutch disc 23 with the fly wheel 21. Therefore, the pressure plate 24, the clutch disc 23 and the fly wheel 21 can be integrally rotated. The pressure plate 24 is connected to the clutch cover 22 via a strap 24a so as to be rotated in response to the rotation of the clutch cover 22.

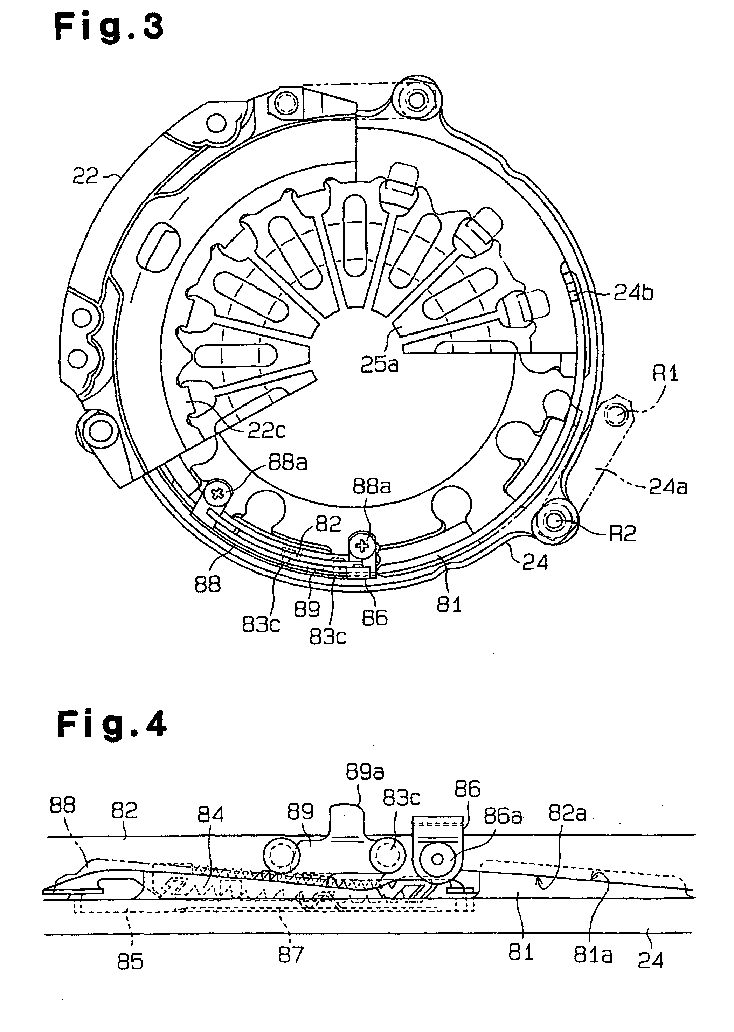

The strap 24a is formed by plural thin accumulated leaf springs. Referring to Fig. 3, one end of the strap 24a is secured to an outer peripheral portion of the clutch cover 22 by means of a rivet R1 and the other end thereof is secured to a projection provided on an outer peripheral portion of the pressure plate 24 by means of a rivet R2. Therefore, the strap 24a applies biasing force to the pressure late 24 so that the pressure plate 24 is moved away from the fly wheel 21.

The diaphragm spring 25 is formed by twelve elastic plate members 25a (hereinafter, referred to as lever members 25a) radially arranged along the inner periphery of the cylindrical portion 22a of the clutch cover 22. Each lever member 25a is provided with a pair of ring shaped fulcrum members 25b, 25c at both sides in an axial direction thereof. Each lever member 25a is held by the fulcrum forming portion 22c via the fulcrum members 25b, 25c. Therefore, each lever member 25a can be pivotably moved relative to the clutch cover 22 via the fulcrum members 25b, 25c (operational fulcrums).

Referring to Figs. 3, 4, a taper portion 81 in a ring shaped structure is provided at the outer peripheral portion of the pressure plate 24. The taper portion 81 includes plural saw-toothed taper surfaces 81a which are upright relative to the diaphragm spring 25. The adjustment wedge member 82 is disposed between the taper surfaces 81a and an outer peripheral portion of the diaphragm spring 25. The adjustment wedge member 82 is in a ring shaped structure having the same diameter as the one of the taper portion 81 and is provided with an wedge side taper surface 82a being in the same structure as the one of the taper surface 81 a. As illustrated in Fig. 4, the wedge side taper surface 82a is in contact with the taper surfaces 81a. The adjustment wedge member 82 is provided with a plane surface at the other side thereof.

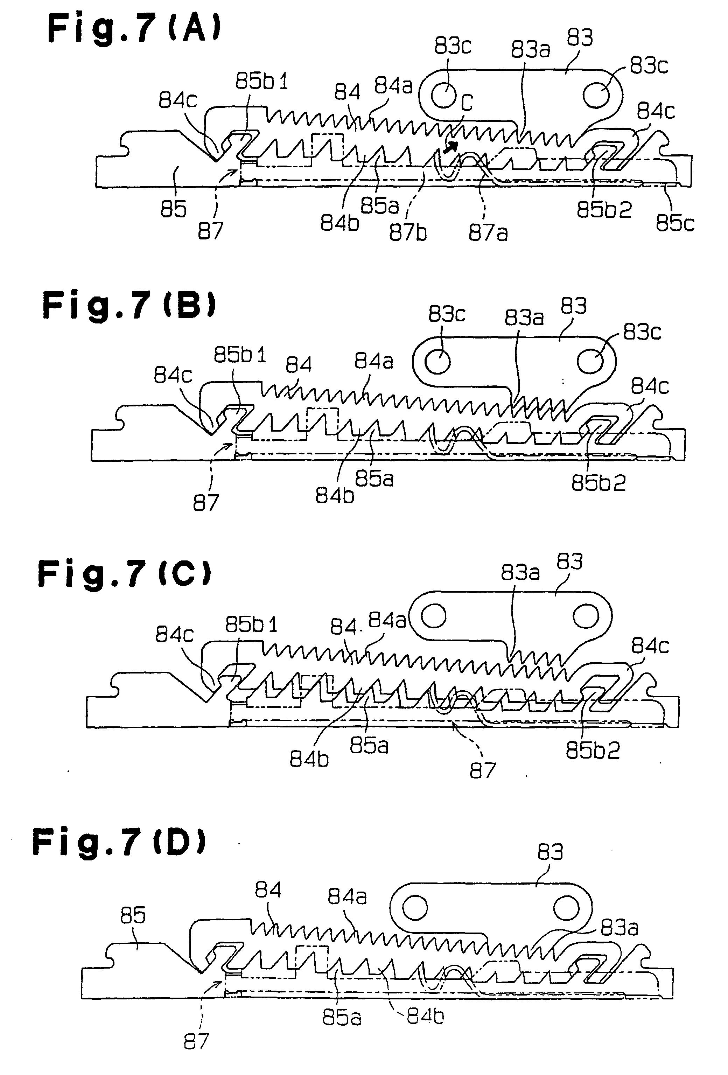

Referring to Fig. 7, a rack engagement member 83 is fixed to an inner peripheral surface of the adjustment wedge member 82 by means of rivets 83c. The rack engagement member 83 is provided with rack engagement teeth 83a being upright in an axial direction from the diaphragm spring 25 to the pressure plate 24. The rack engagement teeth 83a are in a saw-toothed structure or are shaped of triangle with equal spaces therebetween.

A cam means 85 is assembled at an end surface of the pressure plate 24 opposing the rack engagement member 83. The cam means 85 is provided with cam teeth 85a being inclined in an axial direction from the end surface of the pressure plate 24 to the diaphragm spring 25. Projections 85b are provided at both end portions of the cam teeth 85a so as to project along the direction of the inclined faces of the cam teeth 85a. A fixed plate member 88 is formed to be longer than the cam means 85 in a circumferential direction and is assembled along an outer peripheral surface of the taper portion 81. Both end portions of the fixed plate member 88 extend to an inner peripheral side of the taper portion 81 bridging the both end portions of the cam means 85 and are fixed to the pressure plate 24 by means of screw 88a. Therefore, the cam means 85 is secured to the pressure plate 24.

A rack 84 is disposed between the rack engagement member 83 and the cam means 85 and is axially and laterally moveable relative to the rack engagement member 83 and the cam means 85 (the lateral movement being movement circumferentially of the pressure plate 24). The rack 84 is provided with rack teeth 84a extending in the axial direction from the pressure plate 24 to the diaphragm spring 25 and is further provided with a cam teeth 84b extending in the axial direction from the diaphragm spring 25 to the pressure plate 24. The rack teeth 84a are engageable with the rack engagement teeth 83a and the cam teeth 84b cooperate with the cam teeth 85a. Restraining portions 84c are provided at both end portions of the rack 84 in a longitudinal direction thereof and are engageable with the projections 85b. A displacement amount of the rack 84 in the axial direction relative to the cam means 85 and in the peripheral direction thereof is restrained by the restraining portions 84c being hooked at edge portions of the projections 85b before the engagement between the cam teeth 85a and the cam teeth 84b are released. Although the displacement of the rack 84 in the peripheral direction thereof is restrained by the restraining portions 84c, the restrained amount is preset to be within a range between half a pitch of a tooth surface of the rack teeth 84a and a pitch thereof.

Fig 7(B) illustrates the adjusting mechanism immediately before the engagement between the rack engagement teeth 83a and the rack teeth 84a becomes fully disengaged. To reach this condition the adjustment wedge member 82 has been moved in the axial direction relative to the pressure plate 24 from the condition illustrated in Fig 7(A).

One end of a biasing member 87 is fixed to a portion adjacent to a projection 85b1 (one of the projections 85b) at an outer peripheral surface of the cam means 85 so as to bias the rack 84 in a direction for releasing the rack 84 from being engaged with the cam means 85. The other end of the biasing member 87 extends along the outer peripheral surface of the cam means 85 in a direction of a projection 85b2 (the other one of the projections 85b) of the cam means 85 and further extends in a direction of an inner peripheral surface of the cam means 85 via a notch 85c. Further, a spring member 87a extends at the inner peripheral projection 85b1. The spring member 87a biases the rack 84 in a direction (in a direction **C** in Fig. 7(A)) for slidably releasing the cam teeth 84b from being engaged with the cam teeth 85a. A portion in which the biasing member 87 extends from the one end thereof to the notch 85c is employed as a receiving portion 87b for receiving biasing force of the spring portion 87a for biasing the rack 84. While the cam teeth 85a are slidably moved relative to the cam teeth 84b, the rack 84 is biased by the biasing member 87 in the direction for releasing the engagement between the rack 84 and the cam means 85.

A stop means 24b is provided at the end surface at the outer periphery of the pressure plate 24 at the side of the diaphragm spring 25 and is upright in the axial direction from the pressure plate 24 to the diaphragm spring 25. A clearance is defined between the stop means 24b and an upper end surface at an inner peripheral side of the clutch cover 22 when the clutch 20 is under an engaged condition. The pressure plate 24 is hence movable in the axial direction thereof within the clearance in response to the posture of the diaphragm spring 25. When the stop means 24b becomes in contact with the upper end surface at the inner peripheral side of the clutch cover 22 in response to a posture change of the diaphragm spring 25, a further movement of the pressure plate 24 towards the clutch cover 22 cannot be performed.

A holding member 86 is fixed to an outer peripheral surface of the adjustment wedge member 82 by means of a rivet 86a. The holding member 86 extends to a side of the diaphragm spring 25 beyond an end surface of the adjustment wedge member 82 at the side of the diaphragm spring 25. An outer peripheral portion of the diaphragm spring 25 is held between the holding member 86 and the end surface of the adjustment wedge member 82. Therefore, the adjustment wedge member 82 is connected to the outer peripheral portion of the diaphragm spring 25 to follow the two-way axial movement thereof via the holding member 86.

Referring to Fig. 4, an engagement releasing member 89 is assembled to be opposed to the rack engagement member 83 at the outer peripheral surface of the adjustment wedge member 82. One end of the engagement releasing member 89 is rotatably assembled relative to the peripheral surface of the adjustment wedge member 82 and the other end thereof is designed to become in contact with the end surface of the pressure plate 24 at the side of the diaphragm spring 25. An end surface of the pressure plate 24 at the side of the diaphragm spring 25. A projection 89a is provided between the said one end of the engagement releasing member 89 and the other end thereof, is upright in the axial direction from the pressure plate 24 to the diaphragm spring 25, and projects a predetermined distance towards the upper end surface at the inner peripheral side of the clutch cover 22 when the clutch 20 is under the engagement condition. Further, the said one end of the engagement releasing member 89 is connected to the adjustment wedge member 82 by means of one of the rivets 83c for fixing the rack engagement member 83. The predetermined distance between the projection 89a and the upper end surface at the inner peripheral side of the clutch cover 22 under the clutch 20 being the engaged condition is preset so as to bring the projection 89a in contact with the upper end surface at the inner peripheral side of the clutch cover 22 substantially at the same time as the stop means 24b comes into contact with the upper end surface at the inner peripheral side of the clutch cover 22.

Referring to Fig. 2, the release bearing 26 is supported to be slidably movable relative to a holding sleeve 11b supported by the transmission case 11a enclosing an outer periphery of the input shaft of the transmission 11 and is provided with a force point portion 26a for pushing an inner end portion of each lever member 25a, i.e. a central side of the diaphragm spring 25, towards the fly wheel 21.

The release fork (a fork member) 27 is employed for slidably moving the release bearing 26 in an axial direction thereof in response to an operation of the actuator 30. One end of the release fork 27 is in contact with the release bearing 26 and the other end thereof is in contact with a tip end portion of a rod 31 of the actuator 30 via a contact portion 27a. The release fork 27 is assembled at the pivot supporting member 28 by a spring 27c fixed to the transmission case 11 a. The release fork 27 is further designed to be pivotably moved with the pivot supporting member 28 as a fulcrum via an approximately central portion 27b of the release fork 27.

The actuator 30 is provided with a DC motor 32 for moving the rod 31 in the forward and rearward directions and a housing 33 for supporting the DC motor 32. The actuator 30 is mounted in the vehicle via the housing 33 fixed to the vehicle. The activator 30 is provided with a rotational shaft 34, a sector gear 35, and an assist spring 36 in the housing thereof. The rotational shaft 34 is operated by the DC motor 32 to be rotated. The sector gear 35 being in a sector-shaped structure from a side view is supported in the housing 33 so as to be pivotally rotated.

The rotational shaft 34 is provided with a worm portion being engaged with a circular arc-shaped portion of the sector gear 35. A base end portion (the other end portion of the tip end portion being in contact with the release fork 27) of the rod 31 is rotatably supported by the sector gear 35. Therefore, the sector gear 35 is rotated in response to a rotation of the DC motor 32 so as to move the rod 31 in the forward and rearward directions relative to the housing 33.

The assist spring 36 is preset to be compressed when the sector gear 35 is within a pivotably movable range thereof. One end of the assist spring 36 is engaged with a rear end portion of the housing 33. The other end thereof is engaged with the sector gear 35. Therefore, the assist spring 36 functions for biasing the sector gear 35 in a clockwise direction when the sector gear 35 is rotated beyond a predetermined angle in the clockwise direction. That is, the assist spring 36 biases the rod 31 in a right direction in Fig. 2 and assists an operation of the DC motor 32 for moving the rod 31 in the right direction.

Referring to Fig. 1, the clutch control circuit 40 is provided with a microcomputer (CPU)41, interfaces 42, 43, 44, an electric power source circuit 45, and a driving circuit 46. The CPU 41 is provided with a ROM and a RAM memorizing programs (described later) and maps (described later).

The interface 42 is connected to the CPU 41 via a bus and is further connected to a shift lever load sensor 51, a vehicle speed sensor 52 for detecting a vehicle speed **V,** a gear position sensor 53 for detecting a shift stage actually selected by the transmission 11, a transmission input shaft rotational speed sensor 54 for detecting a rotational speed of the input shaft 11c of the transmission 11, and a stroke sensor 37. The shift lever load sensor 51 is employed for detecting load generated upon a driver's manual operation of a shift lever (not shown) of the transmission 11, i.e. for detecting a shift lever load. The stroke sensor 37 is employed for detecting a stroke **ST** of the rod 31 by detecting an angle of the pivotably rotating sector gear 35. The interface 42 hence supplies a signal detected by each sensor to the CPU 41.

The interface 43 is connected to the CPU 41 via a bus and is further connected to an engine control unit 60 for mutually communicating each other. The engine control unit 60 is connected to a throttle opening degree sensor 55 and an engine rotational speed sensor 56 so as to output a signal detected by each sensor 55, 56 to the CPU 41.

The interface 44 is connected to the CPU 41 via a bus and is further connected to an input terminal of an OR circuit 45a of the electric power source circuit 45 and the driving circuit 46. The interface 44 transmits predetermined signals based upon a command from the CPU 41.

The electric power source circuit 45 is provided with a power transistor **Tr** and a constant voltage circuit 45b. A base portion of the power transistor **Tr** is connected to an output end of the OR circuit 45a. A collector of the power transistor **Tr** is connected to a plus terminal of a battery 70 mounted in the vehicle and an emitter thereof is connected to the constant voltage circuit 45b and the driving circuit 46. Therefore, electric power is supplied to each of them from the power transistor **Tr** when the power transistor **Tr** is **ON.** The constant voltage circuit 45b is employed for converting a battery voltage to a constant voltage (5V) and for supplying the electric power to the CPU 41 and the interfaces 42, 43, 44 which all are connected to the constant voltage circuit 45b. The other input terminal of the OR circuit 45a is connected to one end of an ignition switch 71 manually operated to be turned **ON** and **OFF** by the driver. The other end of the ignition switch 71 is connected to the plus terminal of the battery 70. The one end of the ignition switch 71 is also connected to the interface 42 so that the CPU 41 can detect the condition of the ignition switch 71.

The driving circuit 46 is provided with four switching elements (not shown) turned **ON** or **OFF** by command signal from the interface 44. The switching elements forming a known bridge circuit are selectively controlled to be under a conducted condition for a controlled conducting period. Therefore, the switching elements can supply a predetermined electric current to the DC motor 32 in a predetermined direction and in a reverse direction thereof.

The engine control unit 60 is provided with a microcomputer (not shown) as a main element thereof and is employed for controlling fuel consumption of the engine 10 and an ignition timing thereof. As described above, the engine control unit 60 is connected to the throttle opening degree sensor 55 for detecting the throttle opening degree **TA** of the engine 10 and the engine rotational speed sensor 56 for detecting the rotational speed N_{E} of the engine 10. Further, the engine control unit 60 performs an inputting process of the signal of each sensor and a calculating process based upon the signal.

Regarding the above described clutch control apparatus according to the embodiment of the present invention, the actuator 30 automatically performs the engagement and disengagement operations of the clutch 20 in substitution for the manual clutch pedal operation by the driver. That is, the engagement and disengagement operations of the clutch 20 are performed, for example, under the following three conditions; (1) when the CPU 41 detects that the vehicle state is shifting from a vehicle running state to a vehicle stationary state, e.g. when the rotational speed of the input shaft 11c of the transmission 11 becomes equal to or smaller than a predetermined value, (2) when the CPU 41 detects that the load detected by the shift lever load sensor 51 becomes equal to or greater than a predetermined value, e.g. when the intention of the driver to change a shift stage is recognized, and (3) when the CPU 41 detects that an accelerator pedal (not shown) is depressed while the vehicle is in the stationary state.

Next, an operation of the clutch 20 under the engaged condition is described below, wherein the driving power of the engine 10 can be transmitted to the transmission 11. A predetermined electric current is first supplied to the DC motor 32 from the driving circuit 46 based upon the command signal from the clutch control circuit 40 so that the DC motor 32 is operated to be rotated. Therefore, the sector gear 35 is rotated in a counterclockwise direction and the rod 31 is moved in the left direction in Fig. 2.

On the other hand, the release bearing 26 is applied with force by the diaphragm spring 25 in a direction to be moved away from the fly wheel 21, i.e. in the right direction in Fig. 2. The force is transmitted to the release fork 27 via the release bearing 26 so that the release fork 27 is applied with a force to be pivotally moved with the pivot-supporting member 28 as the fulcrum in the counterclockwise direction in Fig. 2. Therefore, the central portion of the diaphragm spring 25 is displaced in the direction to be away from the fly wheel 21.

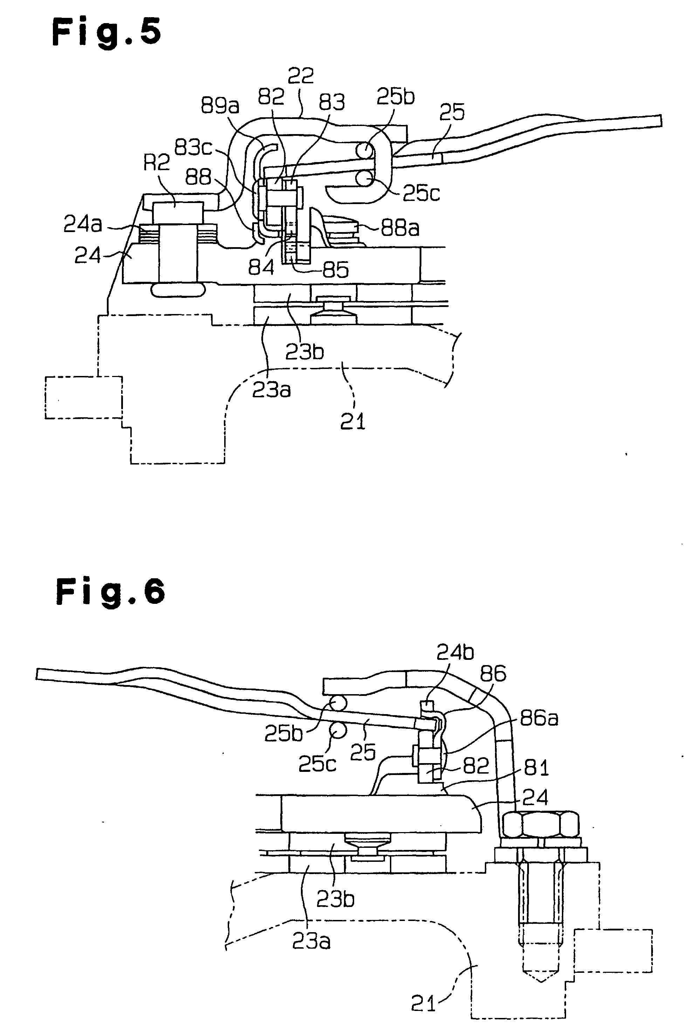

Referring to Figs. 5, 6, when the clutch 20 is under the engaged condition, the diaphragm spring 25 is pivotably moved, i.e. the posture of the diaphragm spring 25 is varied, with a center on the fulcrum members 25b, 25c and pushes the adjustment wedge member 82 being in contact with the outer peripheral portion of the diaphragm spring 25 towards the fly wheel 21. The pressure plate 24 is hence applied with a force to be moved towards the fly wheel 21 via the taper portion 81 so that the clutch disc 23 is gripped between the pressure plate 24 and the fly wheel 21. Further, the pressure plate 24 is applied with a force to be moved towards the fly wheel 21 via the rack engagement member 83, the rack 84, and the cam means 85. Therefore, the engaged condition between the rack engagement teeth 83a and the rack teeth 84a and the engaged condition between the cam teeth 84b and the cam teeth 85a are maintained. The rack engagement member 83 is hence not allowed to be rotated relative to the cam means 85 so that the adjustment wedge member 82 is not rotated relative to the pressure plate 24. Therefore, the clutch disc 23 is frictionally engaged with the fly wheel 21 maintaining a predetermined distance between the pressure plate 24 and the end portion at the outer peripheral portion of the diaphragm spring 25. Further, the clutch disc 23 is integrally rotated with the fly wheel 21 so that the driving force of the engine 10 can be transmitted to the transmission 11.

Next, an operation of the clutch 20 under the disengaged condition is described below, wherein the driving power of the engine 10 can not be transmitted to the transmission 11. The sector gear 35 is rotated in the clockwise direction in Fig. 2 in response to the operation of the DC motor 32. The rod 31 is then moved in the right direction in Fig. 2 and applies a force to the release fork 27 to be moved in the right direction in Fig. 2 via the contact portion 27a. The release fork 27 is then pivotably rotated in the clockwise in Fig. 2 with the supporting point of the pivot supporting member 28 as the fulcrum. Therefore, the release bearing 26 is moved towards the fly wheel 21.

The diaphragm spring 25 is applied with a force to be moved towards the fly wheel 21 at the force point portion 26a so as to be pivotably rotated with a center on the fulcrum members 25b, 25c. The end portion at the outer peripheral portion of the diaphragm spring 25 is hence moved away from the fly wheel 21. Therefore, the force pushing the pressure plate 24 towards the fly wheel 21 via the adjustment wedge member 82 is decreased. The pressure plate 24 is connected to the clutch cover 22 via the strap 24a and is always biased to be moved away from the fly wheel 21. The pressure plate 24 is hence slightly separated from the clutch disc 23 by the biasing force. Therefore, the driving power of the engine 10 is not transmitted to the transmission 11.

The stroke **ST** of the rod 31 is controlled within a range in which the stop means 24b is not brought in contact with the clutch cover 22, i.e. in which the projection 89a is not brought in contact with the clutch cover 22, when the clutch 20 is under the disengaged condition. The axial distance between the pressure plate 24 and the diaphragm spring 25 is not hence changed so that the engagement condition between the rack engagement teeth 83a and the rack teeth 84a and the engagement condition between the cam teeth 85a and the cam teeth 84b can be maintained. Therefore, the adjustment wedge member 82 is not moved relative to the pressure plate 24. In other words, the stroke **ST** of the rod 31 is determined to be a value in which the engagement condition between the rack engagement teeth 83a and the rack teeth 84a and the engagement condition between the cam teeth 85a and the cam teeth 84b are not released.

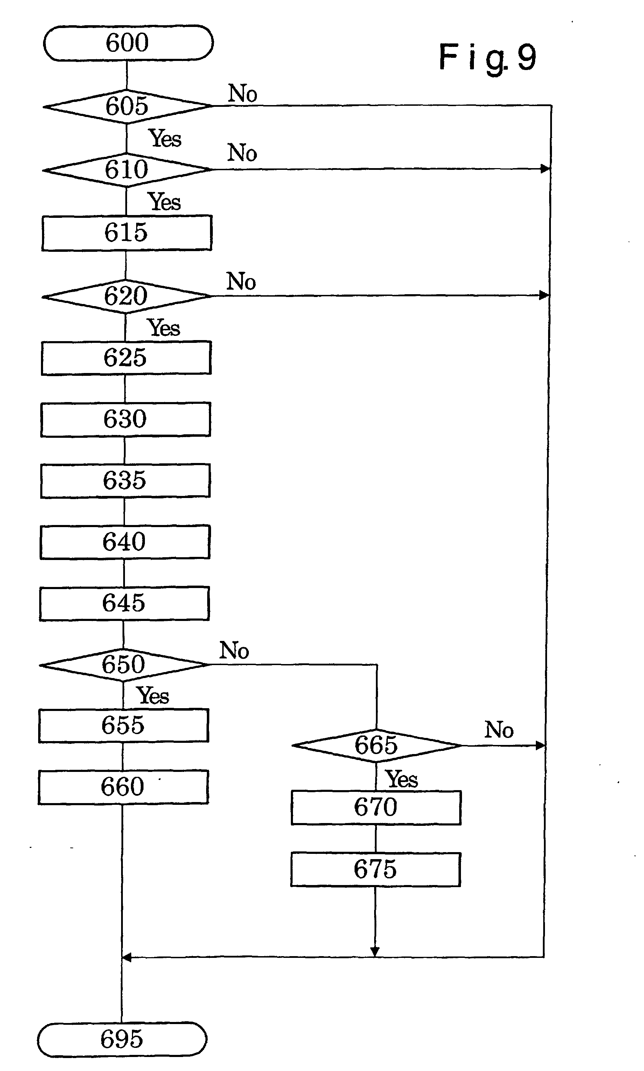

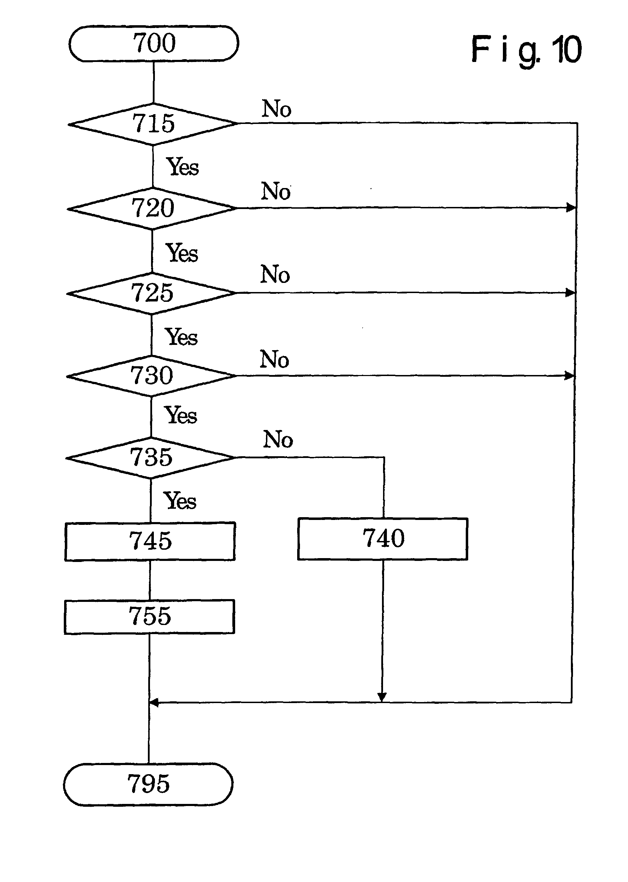

Next, an operation for compensating for the abrasion of the clutch facings 23a, 23b is described below with reference to flow charts illustrated in Figs. 9, 10.

The abrasion compensating operation (an adjusting operation) of the clutch disc 23 commences under a condition that the abrasion of the clutch facings 23a, 23b has not been progressed, for example immediately after the abrasion compensating operation was performed, immediately after a shipment from a factory, or immediately after the clutch disc 23 was replaced with a new one.

Referring to Fig. 9, the CPU 41 repeatedly performs a routine for judging whether or not the adjusting operation is required at a predetermined time basis when an electric power has been supplied. The CPU 41 starts the routine from step **600** and proceeds to step **605** for judging whether or not a value of a flag **F**_{**IG**} is set at "0". The flag **F**_{**IG**} is set at "0" by an initial routine (not shown) performed by the CPU 41 when an ignition switch 71 is turned **ON** from **OFF.** As described later, the flag **F**_{**IG**} is set at "1" when ten buffers A(1) through A(10) are updated.

The value of the flag **F**_{**IG**} is set at "0" when the ignition switch 71 is turned **ON** from **OFF** and when the buffers A(1) through A(10) have not been updated. Therefore, an affirmative judgment **(YES)** is obtained at step **605** and the program proceeds to step **610.** On the other hand, when the buffers A(1) through A(10) are updated at step **605,** the value of the flag **F**_{**IG**} is set at "1" so that a negative judgment **(NO)** is obtained at step **605.** Therefore, the program proceeds to step **695** so as to terminate the routine.

At step **610,** the CPU 41 judges whether or not the engine 10 is in a stationary condition. More specifically, the CPU 41 judges that the engine 10 has been stopped when the engine rotational speed **N**_{**E**} is "0" or when a sufficient time has passed since the ignition switch 71 has been turned **OFF** from **ON.** When the affirmative judgment **(YES)** is obtained at step **610,** the program proceeds to step **615.** When the negative judgment **(NO)** is obtained at step **610,** the program proceeds to step **695** so as to terminate the routine.

When the CPU 41 judges that the engine 10 has been stopped and the program proceeds to step **615,** a full engagement electric current value **I**_{**MKGO**} is applied to an electric current **I**_{**M**} to be supplied to the DC motor 32 so as to fully engage the clutch 20 at step **615.** Therefore, the rod 31 is moved in the left direction in Fig. 2 in response to the rotation of the DC motor 32 so that the clutch disc 23 is gradually engaged with the fly wheel 21.

The program then proceeds to step **620** for judging whether or not the clutch 20 is under the fully engaged condition. More specifically, the CPU 41 judges that the clutch 20 is under the fully engaged condition when a sufficient time has passed since the electric current **I**_{**M**} to be supplied to the DC motor 32 has been changed or when the stroke **ST** detected by the stroke sensor 37 has not been changed for at least a predetermined period of time. When the CPU 41 judges that the clutch 20 is not under the fully engaged condition yet, a negative judgment **(NO)** is obtained at step **620** so that the program proceeds to step **695** for terminating the routine.

As described above, the processes at steps 605, 610, 620 are then repeatedly performed at a predetermined clock cycle. When the condition that the valve of the flag **F**_{**IG**} is set at "0" and the engine 10 under the stationary condition is continued for a period of time required for engaging the clutch 20, the affirmative judgment **(YES)** is obtained at step **620** so that the program proceeds to step **625.** If the engine 10 is driven before the affirmative judgment **(YES)** is obtained at step **620,** the DC motor 32 is applied with electric current corresponding to each condition by performing a routine (not shown). Therefore, an appropriate clutch engagement control can be performed.

At step **625,** values of nine buffers A(2) through A(10) are updated. More specifically, assuming that **"n"** represents natural numbers from 1 to 9, the buffer A(**n**) is sequentially shifted to a buffer A(**n+1**). The buffer A(10) before being updated is deleted.

The program then proceeds to step **630** for updating the buffer A(1) with an actual stroke **ST** detected by the stroke sensor 37. The program then proceeds to step **635** for calculating a simple average value of the ten buffers A(1) through A(10) and for applying the simple average value to a fully engagement position **KKI**. The program then proceeds to step **640** to set the value of the flag **F**_{**IG**} at "1". At step 645, the electric current **IM** is set at "0" so as to stop the electric current supply to the DC motor 32.

At step **650,** the CPU 41 judges whether or not a value of a counter **N** is smaller than a predetermined value **T1.** According to the embodiment of the present invention, the predetermined value **T1** is set to be 10. As described later, the counter **N** is set to be "0" when the abrasion compensating operation of the clutch disc 23 was performed, when is shipped from the factory, or when the clutch disc 23 is replaced with a new one. In such a case, the affirmative judgment **(YES)** is obtained at step **650** and the program proceeds to step **655** so as to set the fully engagement position **KKI** as an adjusting reference position **AKI.** The CPU 41 proceeds to step **660** for increasing the value of the counter **N** by "1". The program proceeds to step **695** so as to terminate the routine.

The above described routine is then repeatedly performed by the CPU 41 at the predetermined time basis. Unless the ignition switch 71 is turned **ON** from **OFF,** the value of the flag **F**_{**IG**} is maintained at "1". Therefore, the negative judgment **(NO)** is obtained at step **605** and the program proceeds to step **695.** Therefore, the fully engagement position **KKI** and the adjusting reference position **AKI** are not updated.

The ignition switch 71 is then turned **OFF** from **ON** and is further turned **ON** from **OFF.** The value of the flag **F**_{**IG**} is hence changed to "0". The affirmative judgment **(YES)** is obtained at step **605** and the program proceeds to step **610.** When the above described processes are performed and the conditions, for example that the engine 10 is under the stationary condition and that the clutch 20 is under the fully engaged condition, are satisfied, the adjusting reference position **AKI** is updated at step **655** and the value of the counter **N** is increased by "1" at step 660.

Upon repeatedly performing the above described operations, the values of the buffers A(1) through A(10) are sequentially updated and the adjusting reference position **AKI** is updated. Further, the value of the counter **N** is gradually increased. When step **650** is performed again in a state where the value of the counter **N** is set at the predetermined value **T1** (in this case, the predetermined value **T1** is 10) at step 660, the negative judgment **(NO)** is obtained at step **650** and the program proceeds to step **665.** At step **665,** the CPU 41 judges whether or not a difference between the adjusting reference position **AKI** and the fully engagement position **KKI** (or an absolute value of the difference therebetween) is greater than a predetermined threshold value **L**. When the difference (or the absolute value of the difference) is smaller than the predetermined threshold value **L,** the negative judgment **(NO)** is obtained at step **665.** The program then proceeds to step **695** so as to terminate the routine.

While steps 610 through 635 are performed, the fully engagement position **KKI** is updated to be a value corresponding to the extent of the abrasion of the clutch facings 23a, 23b. The value of the counter **N** is maintained to be greater than the predetermined value **T1.** Therefore, the negative judgment **(NO)** is obtained at step **650** so that the program proceeds to step **665.** In this case, the step **655** is not performed. The adjusting reference position **AKI** is hence maintained at a value immediately after the adjusting operation, at a value immediately after the shipment from the factory, or at a value immediately after the clutch disc 23 was replaced with a new one.

The clutch facings 23a, 23b are abraded through the repeatedly performed engagement and disengagement operations of the clutch 20 while the vehicle has been driven for a long period of time. The difference between the adjusting reference position **AKI** and the fully engagement position **KKI** then becomes greater than the predetermined threshold value **L**. In such a case, the affirmative judgment **(YES)** is obtained at step **665** and the program proceeds to step **670.** At step **670,** the CPU 41 sets a value of an adjusting operation requiring flag **F**_{**ADJ**} at "1". The adjusting operation requiring flag **F**_{**ADJ**} set at "1" represents that the adjusting operation should be performed.

At step **675,** the difference between the adjusting reference position **AKI** and the fully engagement position **KKI** is set as an abrasion amount **X** of the clutch facings 23a, 23b, i.e. a required adjusting amount. The program then proceeds to step **695** so as to terminate the routine. As described above, the value of the adjusting operation requiring flag **F**_{**ADJ**} is set at "1" when the extent of the abrasion of the clutch facings 23a, 23b has been progressed.

According to the embodiment of the present invention, the fully engagement position **KKI** is updated when the engine 10 is under the stationary condition. Therefore, vibration of the engine 10 is not applied to the clutch 20 and the fully engagement position **KKI** can be determined with high accuracy. Further, according to the embodiment of the present invention, the fully engagement position **KKI** is determined by averaging the strokes **ST** at every ten fully engagement operations of the clutch 20 by employing the buffers A(1) through A(10). Therefore, the fully engagement position **KKI** can be determined with high accuracy.

Next, an operation for actually performing the adjusting operation is described with reference to a flow chart illustrated in Fig. 10. The operation is described assuming that all conditions for performing steps **715** through **730** for the adjusting operation are satisfied. The CPU 41 performs a routine illustrated in Fig. 10 at a predetermined period of time basis. The CPU 41 starts the routine from step **700** at a predetermined timing and proceeds to step **715.** At step **715,** the CPU 41 judges whether or not the value of the adjusting operation requiring flag **F**_{**ADJ**} is set at "1" or not. This process at step 715 is employed for performing the adjusting operation only when the adjusting operation has been required.

In this case, the value of the adjusting operation requiring flag **F**_{**ADJ**} has been assumed to be set at "1". Therefore, the affirmative judgment **(YES)** is obtained at step **715** so that the program proceeds to step **720** for judging whether or not the clutch disc 23 is under the disengagement condition. When the clutch 20 is maintained under the engaged condition, the adjusting operation cannot be performed.

In this case, the clutch disc 23 has been assumed to be under the disengaged condition. Therefore, the affirmative judgment **(YES)** can be obtained at step **720** and the program proceeds to step 725 for judging whether or not the rotational speed **N**_{**E**} of the engine 10 is greater than a predetermined rotational speed α at a low speed (e.g. 400 rpm which is a minimum rotational number required for driving the engine 10) and is smaller than a predetermined rotational speed β at high speed (e.g. 2000 rpm in which the vibration of the engine 10 is increased). The adjusting operation can be performed in a state where the rotational speed of the engine 10 is small and the clutch 20 is not resonated so that the adjusting operation is not performed falsely. It is not preferable that the adjusting operation for fully disengaging the clutch disc 23 is performed when the vehicle is parked in a state where a predetermined speed change gear is engaged. Therefore, the adjusting operation is set to be performed only when the rotational speed **N**_{**E**} of the engine 10 is greater than the predetermined rotational speed α corresponding to the idle speed of the engine.

Therefore, the affirmative judgment **(YES)** is obtained at step **725** and the program proceeds to step **730** for judging whether or not the vehicle speed **V** is set at "0". Therefore, the adjusting operation can be performed accurately with no vibration of the running vehicle being applied to the clutch 20. In this case, the vehicle has been assumed to be under the stationary condition and the vehicle speed **V** is set to be "0". The affirmative judgment **(YES)** is hence obtained at step **730** and the program proceeds to step **735.** The above described steps **715** through **730** are performed for judging whether or not the conditions for actually commencing the adjusting operation are satisfied.

At step **735,** the CPU 41 detects whether or not the stroke **ST** corresponds to a value in which the abrasion amount **X** is added with a predetermined distance **Y** and a predetermined distance **Z.** The predetermined distance **Y** corresponds to the distance in the axial direction between the stop means 24b and the inner peripheral surface of the clutch cover 22, i.e. the distance in the axial direction between the projection 89a and the inner peripheral surface of the clutch cover 22, when the clutch 20 is under the engaged condition in a state where the abrasion of the clutch facings 23a, 23b has not been progressed yet immediately after the adjusting operation of the clutch disc 23 was performed, immediately after the shipment from the factory, or immediately after the clutch disc 23 was replaced with a new one. Further, the predetermined distance **Y** is approximately equal to a maximum value of a stroke **ST**_{**0**} for disengaging the clutch 20 under the normal vehicle driving. The predetermined distance **Z** is a moving distance of the adjust wedge member 82 in the axial direction relative to the pressure plate 24, i.e. a moving distance of the rack engagement member 83 in the axial direction relative to the cam means 85, by the time when the rack engagement teeth 83a and the rack teeth 84a are fully released from the engaged condition.

In this case, the clutch 20 is under the engaged condition so that the stroke **ST** is equal to the stroke **ST**_{**0**}**.** Therefore, the negative judgment **(NO)** is obtained at step **735** so that the program proceeds to step **740.** At step **740,** an electric current value **IM**_{**ADJ**} for adjusting is applied to the electric current **IM.** Therefore, the stroke **ST** gradually approaches a judgment value **(X + Y + Z).** The program then proceeds to step **795** for terminating the routine.

The CPU 41 then repeatedly performs the routine at the predetermined time basis. Therefore, at steps **715** through **730,** the conditions for performing the adjusting operations are observed whether or not to be satisfied. At step **735,** the stroke **ST** is detected whether or not to have reached the judgment value **(X + Y + Z).**

As the predetermined period of time passes, the posture of the diaphragm spring 25 is changed. That is, the central portion of the diaphragm spring 25 is applied with the force to be moved towards the fly wheel 21 via the force point portion 26a. The diaphragm spring 25 is pivotally moved with a center on the fulcrum members 25b, 25c and the edge portion at the outer peripheral portion of the diaphragm spring 25 is gradually moved away from the pressure plate 24. Therefore, the stop means 24b comes into contact with the inner peripheral surface of the clutch cover 22. Substantially at the same time, the projection 89a of the engagement releasing member 89 comes into contact with the inner peripheral surface of the clutch cover 22. The pressure plate 24 has been applied with the biasing force of the strap 24a until the stop means 24b and the projection 89a come into contact with the inner peripheral surface of the clutch cover 22. Therefore, the taper portion 81 is also moved in the axial direction in response to the axial movement of the adjustment wedge member 82 being moved with the edge portion at the outer peripheral portion of the diaphragm spring 25. The rack engagement member 83 and the cam means 85 cannot be hence moved relatively in the axial direction. Therefore, the engaged condition between the rack engagement teeth 83a and the rack teeth 84a and the engaged condition between the cam teeth 85a and the cam teeth 84b are maintained.

In this case, the stoke **ST** is equal to a value **(X + Y)** being smaller than the judgment value **(X + Y + Z).** Therefore, the negative judgment **(NO)** is obtained at step **735** and the program proceeds to step **740.** In this case, the electric current value **IM**_{**ADJ**} has been continuously supplied to the DC motor 32 so that the posture of the diaphragm spring 25 is further varied. The stop means 24b has been in contact with the inner peripheral surface of the clutch cover 22 so as to limit the further axial movement of the pressure plate 24. However, the posture of the diaphragm spring 25 is varied so as to separate the edge portion at the outer peripheral portion thereof from the fly wheel 21. The supporting member 86 is directly applied with the axially moving force of the edge portion at the outer peripheral portion of the diaphragm spring 25 and the adjustment wedge member 82 fixed to the supporting member 86 is moved in the axial direction following the edge portion at the outer periphery of the diaphragm spring 25. Therefore, the rack engagement member 83 fixed to the adjustment wedge member 82 is moved in the axial direction relative to the cam means 85. As illustrated in Fig. 7 (A), the rack 84 has been biased in the C direction by the biasing member 87. However, the rack engagement member 83 is moved in the axial direction. The rack 84 can not be hence displaced in the circumferential direction unless the engagement between the rack engagement 83a and the rack teeth 84a is fully released. Therefore, the rack engagement member 83 can be moved in the axial direction relative to the cam means 85 while the stroke **ST** is within a range in which the engagement between the rack engagement teeth 83a and the rack teeth 84a are not fully released. On the contrary, the rack 84 can not be moved in the axial direction since the engagement between the cam teeth 84b and the cam teeth 85a has been maintained.

Under the above condition, when the adjustment wedge member 82 is further moved away from the pressure plate 24 in response to the further posture variation of the diaphragm spring 25, the engagement between the rack engagement teeth 83a and the rack teeth 84a is fully released. That is, the electric current value **IM**_{**ADJ**} has been continuously supplied from the condition of the adjusting mechanism illustrated in Fig. 7(B). The stroke **ST** can be increased sufficiently for fully releasing the engagement therebetweencorresponding to the electric current value **IM**_{**ADJ**}**.** Therefore, the engagement between the rack engagement teeth 83a and the rack teeth 84a is fully released. In this case, the rack 84 is allowed to be displaced in the circumferential direction. Therefore, the second rack teeth 84b is slidably moved relative to the cam teeth 85a so that the rack 84 being biased by the biasing member 87 can be displaced in the axial and circumferential directions thereof. At the same time, the rack engagement teeth 83a is separated from the rack teeth 84a in response to the further posture variation of the diaphragm spring 25. However, the displacement amount of the rack 84 in the axial direction relative to the cam means 85 has been limited to a predetermined distance by the restraining portion 84c. Therefore, cam means 85the axial moving amount of the rack 84 relative to the cam means 85 is limited when the axial moving amount of the rack 84 relative to the cam means 85 reaches the predetermined distance, as illustrated in Fig. 7(C). The displacement movement of the rack 84 in the circumferential direction has been set at half a pitch of the tooth surface of the rack teeth 84a. Therefore, the position of the rack teeth 84a relative to the rack engagement teeth 83a illustrated in Fig. 7(C) is shifted by half a pitch comparing with the conditions illustrated in Figs. 7(A) and 7(B).The rotation of the adjustment wedge member 82 relative to the pressure plate 24 is not performed under the condition illustrated in Fig. 7(C).

Next, an operation of the engagement releasing member 89 corresponding to the shifting of the adjusting mechanism from Fig. 7(A) to (B), (C) is described below.

When the adjustment wedge member 82 is moved further away from the pressure plate 24 in a state where the projection 89a has been in contact with the clutch cover 22, the engagement releasing member 89 is rotated in a counterclockwise direction in Fig. 4 with a center on the rivet 83C (the right one in Fig. 4) at the one end of the engagement releasing member 89. The other end of the engagement releasing member 89 pushes the end surface of the pressure plate 24 at the side of the diaphragm spring 25 below in Fig. 4. Therefore, the pressure plate 24 can be firmly separated from the adjustment wedge member 82. Therefore, the relative movement between the adjustment wedge member 82 and the taper portion 81 can be performed even when there is rust between the taper surface 81a and the wedge side taper surface 82a.

As the predetermined period of time passes and the stroke **ST** reaches the judgment value **(X + Y + Z),** the affirmative judgment **(YES)** is obtained at step **735** and the program proceeds to step **745** for setting the value of the adjusting operation requiring flag **F**_{**ADJ**} at "0". At step **755,** the value of the counter **N** is set at "0" for updating the adjusting reference position **AKI.** The program then proceeds to step **795** for terminating the routine. Hereinafter, electric current corresponding to each vehicle driving condition is supplied to the DC motor 32 for performing an appropriate clutch control. The clutch disc 23 is then returned to the disengaged condition (the stroke ST < Y) by performing the other routine (not shown).

Next, the engagement conditions of the rack engagement member 83, the rack 84, and the cam means 85 are described in a state where the clutch disc 23 is returned to the disengaged condition (the stroke **ST < Y**).

Under the above condition of the adjusting mechanism illustrated in Fig. 7(C), when the stroke **ST** is decreased in response to the posture variation of the diaphragm spring 25, the engagement between the rack engagement teeth 83a and the rack teeth 84a commences. Referring to Fig. 7(C), the rack 84 in Fig. 7(C) has been displaced by half a pitch in the circumferential direction comparing with the one illustrated in Fig. 7(B). Therefore, the tooth of the rack teeth 84a opposing the rack engagement teeth 83a in Fig. 7(C) is shifted by one pitch relative to the tooth of the rack teeth 84a engaged with the rack engagement teeth 83a in Fig. 7(A). Therefore, when the stroke **ST** is decreased by the predetermined distance **Z** from the condition illustrated in Fig. 7(C), the rack teeth 84a to be engaged with the rack engagement teeth 83a is shifted by one pitch in the right direction in Fig. 7 relative to the condition illustrated in Fig. 7(A). In this case, the adjustment wedge member 82 is pushed towards the pressure plate 24 by the pushing force of the diaphragm spring 25. Therefore, the engagement between the rack engagement teeth 83a and the rack teeth 84a and the engagement between the cam teeth 85a and the cam teeth 84b are performed. However, the tooth of the rack teeth 84a to be engaged with the rack engagement teeth 83a is shifted by one pitch. Therefore, both engagements therebetween are performed by slidably moving the respective teeth 83a, 84a, and 84b, 85a. Upon the slidable movements of the teeth 83a, 84a, 84b, 85a, the rack 84 is applied with rotational force relative to the rack engagement member 83 and the cam means 85 is applied with rotational force relative to the rack 84. The adjustment wedge member 82 is rotated relative to the pressure plate 24 in response to the rotational force so that the adjusting mechanism is shifted to the condition illustrated in Fig. 7(D). The contact position between the taper surface 81a and the wedge side taper surface 82a is hence displaced by one pitch of the rack teeth 84a. Therefore, the axial direction between the edge portion at the outer peripheral portion of the diaphragm spring 25 and the pressure plate 24 is changed. Further, the posture of the diaphragm spring 25 during the normal vehicle driving is changed. In this case, the axial movement of the projection 89a is not limited by the clutch cover 22 any more. The force for pushing the pressure plate 24 via the other end of the engagement releasing member 89 is decreased so that the engagement releasing member 89 is returned to an initial position.

As described above, when the abrasion amount of the clutch disc 23 is equal to or greater than a predetermined amount and the CPU 41 detects the vehicle condition in which only slight false adjustment may occur even after the adjusting operation, the abrasion of the clutch 20 can be compensated for by an amount corresponding to one pitch of the rack teeth 84a at the one adjusting operation. The amount corresponding to one pitch of the rack teeth 84a is equal to a height of the taper surface 81 a corresponding to one pitch thereof. When the clutch 20 is again returned to the engaged condition, the tooth of the rack teeth 84a to be engaged with the rack engagement teeth 83a is shifted by relatively moving the rack 84 in the circumferential direction by the biasing member 87 by a predetermined displacement amount in the circumferential direction, wherein the abrasion compensating operation is performed. In this case, the cam teeth 84b and the cam teeth 85a are slidably shifted to the fully engaged condition so as to relatively rotate the adjustment wedge member 82 and the taper portion 81. Therefore, the adjusting operation can be performed in response to the operation of the actuator 30 even when there is rust between the adjustment wedge member 82 and the taper portion 81, the rack engagement teeth 83a and the rack teeth 84a, the cam teeth 85a and the cam teeth 84b or when a sliding resistance is large. Further, the abrasion of the clutch 20 can be compensated with high accuracy.

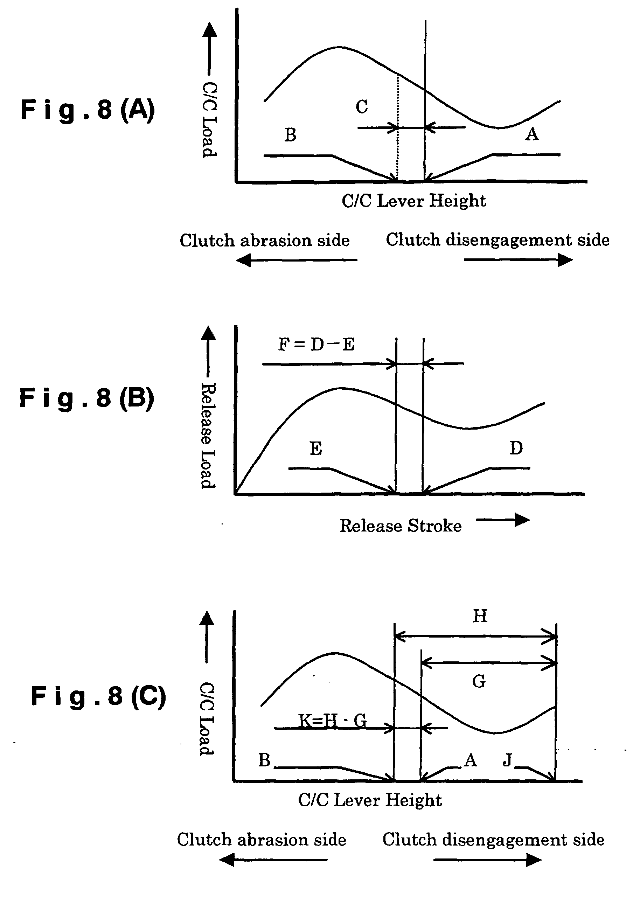

According to the embodiment of the present invention, as illustrated in Fig. 8(A), the abrasion amount **X** is determined as the difference (a distance **C**) between the adjusting reference position **AKI** (point **A**) and the fully engaging position **KKI** (point **B**). However, as illustrated in Fig. 8(B), the abrasion amount **X** can be determined by directly detecting a variation **F** from an initial position **D,** at which the engagement of the clutch disc 23 commences and the abrasion of the clutch disc 23is generated, to a position **E,** at whichthe abrasion has been progressed. Further, as illustrated in Fig. 8(C), the abrasion amount **X** can be determined by detecting a difference **K** between a stroke amount **G** and a stroke amount **H** The stroke amount **G** is a distance between a fully engaged point **A** in the case that there is no abrasion or immediately after the adjusting operation and a position **J** predetermined on a stroke of the clutch cover 22. The stroke amount **H** is a distance between a fully engaged point **B,** at which the abrasion of the clutch 20 has been progressed, and the position **J.**
There are various modifications being applicable for the present invention. For example, an oil pressure type actuator can be employed in substitution for the actuator 30 provided with the DC motor 32. In this case, the rod 31 can be moved in the forward and rearward directions by oil pressure controlled by an electromagnetic valve.

Further, according to the above described embodiment of the present invention, the adjusting operation can be performed by driving the actuator 30 and by correcting the posture of the diaphragm spring 25 only when the clutch cover 22 is unlikely to resonate in response to the vehicle vibration. That is to say, the predetermined condition is one in which the rotational speed of the fly wheel is between α and β. However, the posture of the diaphragm spring 25 can be controlled when other predetermined conditions are satisfied.

Further, the clutch control circuit 40 according to the embodiment of the present invention is a separate unit from the actuator 30. However, the actuator 30 and the clutch control circuit 40 can be provided as a single unit.

Further, according to the embodiment of the present invention, the cam teeth 85a and the cam teeth 84b have a particular saw-toothed structure. However, the cam teeth 85a and the cam teeth 84b can be in a saw-toothed structure having as small an inclined angle in the circumferential direction as the taper surface 81a and the wedge taper surface 82a. Further, the cam teeth 85a and the cam teeth 84b can be in any other cooperating toothed structure so long as the rack 84 is moved in the circumferential direction relative to the cam means 85 when the rack 84 is biased by the biasing member 87.

## Claims

1. A clutch assembly which comprises a clutch disc (23) frictionally engageable between a pressure plate (24) and a fly wheel (21) to establish a frictional driving connection therebetween when the pressure plate (24) is moved by an actuator (30) and a diaphragm spring (25) against the clutch disc (23) and fly wheel (21), and an adjusting mechanism comprising:
means for transmitting an operating force from the diaphragm spring (25) to the pressure plate (24) and
means for varying the axial spacing between the diaphragm spring (25) and the pressure plate (24) to compensate for wear of the clutch disc (23);
**characterised in that** the adjusting mechanism further comprises:
a taper surface (81 a) associated with the pressure plate (24) and extending in an inclined direction towards the diaphragm spring (25);
an adjustment wedge member (82) having a cooperating taper surface (82a) in contact with the taper surface (81a) and being movable up the taper surface (81 a) to vary the separation between the diaphragm spring (25) and the pressure plate (24);
rack and rack engagement means for moving the adjustment wedge member (82) up the taper surface (81 a); and comprising a rack engagement member (83) fixed to the adjustment wedge member (82), having rack engagement teeth (83a) facing the pressure plate (24) and
a rack (84) between the rack engagement member (83) and the pressure plate (24), having on one side thereof rack teeth (84a) engageable with the rack engagement teeth (83a) such that engagement of the rack engagement teeth (83a) with successive rack teeth (84a) advances the adjustment wedge member (82) up the taper surface (81 a); wherein
the rack (84) is movable under the bias of a biasing member (87) in a direction away from the pressure plate (24) but is restrained from such movement while there is engagement between the rack engagement teeth (83a) of the rack engagement member (83) and the rack teeth (84a) and
the movement of the rack (84) in the direction away from the pressure plate (24) under the bias of the biasing member (87) is constrained to incorporate a lateral degree of movement so that when such movement takes place it is a different set of rack teeth (84a) which engages the rack engagement member (83) than those which previously prevented movement of the rack (84), and control means (40) which control the actuator (30) such that:
when a predetermined condition is not satisfied, the movement of the diaphragm spring (25) by the actuator (30) is such that the rack teeth (84a) and rack engagement teeth (83a) remain in engagement for the full range of forward and reverse movement of the diaphragm spring (25) and the range of axial movement of the pressure plate (24) is such that it is not limited by stop means (24b); and
when the predetermined condition is satisfied, the movement of the diaphragm spring (25) by the actuator (30) is increased to bring the rack teeth (84a) and the rack engagement teeth (83a) out of engagement when the pressure plate (24) moves away from the fly wheel (21) to an extent that continued axial movement of the pressure plate is limited by the stop means (24b), and re-engagement of the rack engagement teeth (83a) is with a different and successive set of rack teeth (84a).

2. A clutch assembly and adjusting mechanism according to claim 1, wherein the rack (84) has a set of cam teeth (84b) on a side opposite to the side carrying the rack teeth (84a), the set of cam teeth (84b) being engaged with cooperating cam teeth (85a) of a cam means (85) fixed to the pressure plate (24), the cooperating cam teeth (84b, 85a) acting to give the rack (84) a lateral component of movement circumferentially of the pressure plate (24) when the rack (84) is moved in the direction away from the pressure plate (24).

3. A clutch assembly and adjusting mechanism according to claim 2, wherein the lateral component of movement of the rack (84) is within the range of one half pitch and one full pitch of the rack teeth (84a).

4. A clutch assembly and adjusting mechanism according to claim 3, wherein the axial and lateral movement of the rack (84) is constrained and limited by a restraining portion (84c) of the rack (84).

5. A clutch assembly and adjusting mechanism according to claim 4, wherein the control means (40) controls the actuator (30) such that:
when the predetermined condition is not satisfied, the moving amount of the adjustment wedge member (82) in the axial direction relative to the pressure plate (24) is less than the displacement amount in the axial direction required for fully releasing the engagement between the rack engagement teeth (83a) and the rack teeth (84a); and
when the predetermined condition is satisfied, the moving amount of the adjustment wedge member (82) in the axial direction relative to the pressure plate (24) is equal to or greater than the displacement amount in the axial direction required for fully releasing the engagement between the rack engagement teeth (83a) and the rack teeth (84a).

6. A clutch assembly and adjusting mechanism according to any preceding claim, further comprising an engagement releasing member (89) of which one end is rotatably connected at a peripheral surface of the adjustment wedge member (82) and the other end is designed to come into contact with a face of the pressure plate (24) at the side of the diaphragm spring (25), and the engagement releasing member (89) includes a projection (89a) between the said one end of the engagement releasing member (89) and the other end thereof, the projection (89a) being upright in the axial direction from the pressure plate (24) to the diaphragm spring (25) and coming into contact with a clutch cover (22) at the same time as the movement of the pressure plate (24) in the axial direction is limited by the stop means (24b), wherein the engagement releasing member (89) is rotated about the said one end when the projection (89a) comes into contact with the clutch cover (22) and the adjustment wedge member (82) is moved away from the rack (84) when the other end of the engagement releasing member (89) comes into contact with the said face of the pressure plate (24) at the side of the diaphragm spring (25).

7. A clutch assembly and adjusting mechanism according to any of claims 1 to 6, wherein the predetermined condition is satisfied when an absolute value of the difference between an adjusting reference position (AK1) and a fully engaged position (KK1) of the pressure plate (24) is greater than a predetermined threshold value (L).

8. A clutch assembly and adjusting mechanism according to any of claims 1 to 6, wherein the predetermined condition is satisfied when an absolute value of the difference between an adjusting reference position (AK1) and a fully engaged position (KK1) of the pressure plate (24) is greater than a predetermined threshold value (L) and the rotational speed (N_{E}) of the fly wheel (21) is greater than a first predetermined rotational speed (α) representing an idle engine speed and is smaller than a second predetermined rotational speed (β) representing a high engine speed.

## Patentansprüche

1. Kupplungsbaugruppe, die eine zwischen einer Druckplatte (24) und einem Schwungrad (21) reibend eingreifbare Kupplungsscheibe (23) hat, um eine reibend antreibende Verbindung zwischen diesen einzuführen, wenn die Druckplatte (24) durch einen Aktuator (30) und eine Membranfeder (25) gegen die Kupplungsscheibe (23) und das Schwungrad (21) bewegt wird, und ein Einstellungsmechanismus, mit:
einer Einrichtung zum Übertragen einer Betriebskraft von der Membranfeder (25) zu der Druckplatte (24);
einer Einrichtung zum Variieren des axialen Abstandes zwischen der Membranfeder (25) und der Druckplatte (24), um einen Verschleiß der Kupplungsscheibe (23) auszugleichen;
**dadurch gekennzeichnet, dass** der Einstellungsmechanismus außerdem umfasst:
eine mit der Druckplatte (24) verbundene und sich in einer geneigten Richtung zu der Membranfeder (25) erstreckende schräge Oberfläche (81a);
ein Einstellkeilteil (82) mit einer zusammenwirkenden schrägen Oberfläche (82a), die in Berührung mit der schrägen Oberfläche (81a) ist und die schräge Oberfläche (81a) aufwärts bewegbar ist, um die Trennung zwischen der Membranfeder (25) und der Druckplatte (24) zu variieren;
eine Halterung und eine Halterungseingreifeinrichtung, um das Einstellkeilteil (82) die schräge Oberfläche (81a) hinaufzubewegen; mit einem Halterungseingreifteil (83), das an dem Einstellkeilteil (82) befestigt ist, und der Druckplatte (24) gegenüberliegende Halterungseingreifzähne (83a) aufweist, und
eine Halterung (84) zwischen dem Halterungseingreifteil (83) und der Druckplatte (24), auf deren einer Seite Halterungszähne (84a) mit den Halterungseingreifzähnen (83a) so eingreifbar sind, dass ein Eingreifen der Halterungseingreifzähne (83a) mit nachfolgenden Halterungszähnen (84a) das Einstellkeilteil (82) die schräge Oberfläche (81a) hinauf weiterbewegt; wobei
die Halterung (84) unter der Vorspannung eines Vorspannteils (87) in einer Richtung weg von der Druckplatte (24) bewegbar ist, aber von solch einer Bewegung zurückgehalten wird, während ein Eingreifen zwischen dem Halterungseingreifzahn (83a) des Halterungseingreifteils (83) und dem Halterungszahn (84a) stattfindet, und
die Bewegung der Halterung (84) in die Richtung weg von der Druckplatte (24) unter der Vorspannung des Vorspannteils (87) eingeschränkt ist, um einen schrägen Bewegungsgrad so aufzunehmen, dass es ein unterschiedlicher Satz Halterungszähne (84a) ist, der mit dem Halterungseingreifteil (83) in Eingriff ist, wenn solch eine Bewegung stattfindet, als die, die zurückliegend die Bewegung der Halterung (84) verhindert haben, und eine Steuerungseinrichtung (40), die den Aktuator (30) so steuert, dass:
wenn eine vorbestimmte Bedingung nicht erfüllt ist, die Bewegung der Membranfeder (25) durch den Aktuator (30) derart ist, dass die Eingreifzähne (84a) und die Halterungseingreifzähne (83a) für den vollen Bereich der Vorwärts- und Rückwärtsbewegung der Membranfeder (25) in Eingriff bleiben, wobei der Bereich der axialen Bewegung der Druckplatte (24) derart ist, dass sie nicht durch eine Anschlageinrichtung (24b) begrenzt wird; und
wenn die vorbestimmte Bedingung erfüllt ist, die Bewegung der Membranfeder (25) durch den Aktuator (30) erhöht wird, um die Halterungszähne (84a) und die Halterungseingreifzähne (83a) außer Eingriff zu bringen, wenn die Druckplatte (24) sich von dem Schwungrad (21) zu einem Ausmaß wegbewegt, das eine fortgesetzte axiale Bewegung der Druckplatte durch die Anschlageinrichtung (24b) beschränkt ist und das Wiedereingreifen der Halterungseingreifzähne (83a) mit einem unterschiedlichen und folgenden Satz von Halterungszähnen (84a) stattfindet.

2. Kupplungsbaugruppe und Einstellungsmechanismus nach Anspruch 1, wobei die Halterung (84) einen Satz Nockenzähne (84b) auf einer Seite aufweist, die der die Halterungszähne (84a) tragenden Seite gegenüber liegen, wobei der Satz Nockenzähne (84b) mit zusammenwirkenden Nockenzähnen (85a) einer an der Druckplatte (24) befestigten Nockeneinrichtung (85) in Eingriff ist, und die zusammenwirkenden Nockenzähne (84b, 85a) wirken, um der Halterung (84) eine seitliche Bewegungskomponente im Umfangsbereich der Druckplatte (24) zu geben, wenn die Halterung (84) in die Richtung weg von der Druckplatte (24) bewegt wird.

3. Kupplungsbaugruppe und Einstellungsmechanismus nach Anspruch 2, wobei die seitliche Bewegungskomponente der Halterung (84) sich innerhalb des Bereiches eines halben Abstandes und eines vollen Abstandes der Halterungszähne (84a) befindet.

4. Kupplungsbaugruppe und Einstellungsmechanismus nach Anspruch 3, wobei die axiale und seitliche Bewegung der Halterung (84) durch einen Zurückhalteabschnitt (84c) der Halterung (84) zurückgehalten und beschränkt wird.

5. Kupplungsbaugruppe und Einstellungsmechanismus gemäß Anspruch 4, wobei die Steuerungseinrichtung (40) den Aktuator (30) so steuert, dass:
wenn die vorbestimmte Bedingung nicht erfüllt ist, das Bewegungsausmaß des Einstellkeils (82) in der axialen Richtung relativ zur Druckplatte (24) geringer ist, als das Verschiebungsausmaß in der axialen Richtung, das erforderlich ist, den Eingriff zwischen den Halterungseingriffzähnen (83a) und den Halterungszähnen (84a) vollständig zu lösen; und
wenn die vorbestimmte Bedingung erfüllt ist, das Bewegungsausmaß des Einstellungskeilteils (82) in der axialen Richtung relativ zu der Druckplatte (24) gleich oder größer ist als das Verschiebungsausmaß in der axialen Richtung, das erforderlich ist, den Eingriff zwischen den Halterungseingreifzähnen (83a) und den Halterungszähnen (84a) vollständig zu lösen.

6. Kupplungsbaugruppe und Einstellungsmechanismus nach jedem vorangehenden Anspruch, außerdem mit einem Eingrifflösungsteil (89), dessen eines Ende drehbar mit einer Randfläche des Einstellkeilteils (82) verbunden ist, wobei das andere Ende konstruiert ist, bei der Seite der Membranfeder (25) in Berührung mit einer Fläche der Druckplatte (24) zu kommen, und das Eingrifflösungsteil (89) einem Vorsprung (89a) zwischen dem einen Ende des Eingriff lösungsteils (89) und dessen anderem Ende hat, wobei der Vorsprung (89a) in der axialen Richtung von der Druckplatte (24) zu der Membranfeder (25) aufrecht ist, und zu derselben Zeit in Berührung mit einer Kupplungsabdeckung (22) kommt, bei der die Bewegung der Druckplatte (24) in der axialen Richtung durch die Anhalteeinrichtung (24b) beschränkt ist, wobei das Eingrifflösungsteil (89) um das eine Ende gedreht wird, wenn der Vorsprung (89a) in Berührung mit der Kupplungsabdeckung (22) kommt, und das Einstellkeilteil (82) von der Halterung (84) wegbewegt wird, wenn das andere Ende des Eingrifflösungsteils (89) bei der Seite der Membranfeder (25) in Berührung mit der Fläche der Druckplatte (24) kommt.

7. Kupplungsbaugruppe und Einstellungsmechanismus nach jedem der Ansprüche von 1 bis 6, wobei die vorbestimmte Bedingung erfüllt ist, wenn ein Absolutwert des Unterschieds zwischen einer Einstellbezugsposition (AKI) und einer vollständigen Eingreifposition (KKI) der Druckplatte (24) größer ist, als ein vorbestimmter Schwellwert (L).

8. Kupplungsbaugruppe und Einstellungsmechanismus gemäß jedem der Ansprüche von 1 bis 6, wobei die vorbestimmte Bedingung erfüllt ist, wenn ein Absolutwert des Unterschieds zwischen einer Einstellbezugsposition (AKI) und einer vollständigen Eingreifposition (KKI) der Druckplatte (24) größer ist als ein vorbestimmter Schwellwert (L) und die Drehzahl (N_{E}) des Schwungrads (21) größer ist als eine erste, vorbestimmte Drehzahl (α), die eine Leerlaufdrehzahl darstellt und kleiner ist, als eine zweite vorbestimmte Drehzahl (β), die eine hohe Maschinendrehzahl darstellt.

## Revendications

1. Ensemble d'embrayage qui comprend un disque d'embrayage (23) pouvant se mettre en contact frottant entre un plateau de pression (24) et un volant (21) pour établir un accouplement d'entraînement à friction entre ceux-ci lorsque le plateau de pression (24) est déplacé par un actionneur (30) et un ressort à diaphragme (25) contre le disque d'embrayage (23) et le volant (21), et un mécanisme d'ajustement comprenant :
un moyen destiné à transmettre une force d'actionnement depuis le ressort à diaphragme (25) au plateau de pression (24), et
un moyen destiné à faire varier l'espacement axial entre le ressort à diaphragme (25) et le plateau de pression (24) afin de compenser l'usure du disque d'embrayage (23),
**caractérisé en ce que** le mécanisme d'ajustement comprend :
une surface inclinée (81a) associée au plateau de pression (24) et s'étendant dans une direction inclinée vers le ressort à diaphragme (25),
un élément d'ajustement en coin (82) comportant une surface inclinée coopérante (82a) en contact avec la surface inclinée (81a) et qui est mobile en remontant la surface inclinée (81a) pour faire varier la séparation entre le ressort à diaphragme (25) et le plateau de pression (24),
une crémaillère et un moyen d'engagement de crémaillère destiné à déplacer l'élément d'ajustement en coin (82) en remontant la surface inclinée (81a), et comprenant un élément d'engagement de crémaillère (83) fixé à l'élément d'ajustement en coin (82), comportant des dents d'engagement de crémaillère (83a) face au plateau de pression (24) et
une crémaillère (84) entre l'élément d'engagement de crémaillère (83) et le plateau de pression (24), ayant d'un côté de celui-ci des dents de crémaillère (84a) pouvant s'engrener avec les dents d'engagement (83a) de sorte que l'engagement des dents d'engagement de crémaillère (83a) avec des dents de crémaillère successives (84a) fait avancer l'élément d'ajustement en coin (82) en remontant la surface inclinée (81a), où
la crémaillère (84) est mobile sous la sollicitation d'un élément de sollicitation (87) dans une direction qui l'écarte du plateau de pression (24) mais est limitée dans un tel déplacement pendant qu'il existe un engagement entre les dents d'engagement de crémaillère (83a) de l'élément d'engagement de crémaillère (83) et les dents de crémaillère (84a) et
le déplacement de la crémaillère (84) dans la direction qui l'écarte du plateau de pression (24) sous la sollicitation de l'élément de sollicitation (87) est limité pour incorporer un degré de déplacement latéral de manière à ce que, lorsqu'un tel déplacement a lieu, ce soit un ensemble différent de dents de crémaillère (84a) qui s'engrène avec l'élément d'engagement de crémaillère (83) de celles qui empêchaient précédemment le déplacement de la crémaillère (84) et un moyen de commande (40) qui commande l'actionneur (30) de sorte que :
lorsqu'une condition prédéterminée n'est pas satisfaite, le déplacement du ressort à diaphragme (25) dû à l'actionneur (30) est tel que les dents de crémaillère (84a) et les dents d'engagement de crémaillère (83a) restent engrenées sur la course complète de déplacement vers l'avant et vers l'arrière du ressort à diaphragme (25) et la course du déplacement axial du plateau de pression (24) est telle qu'elle n'est pas limitée par un moyen de butée (24b), et
lorsque la condition prédéterminée est satisfaite, le déplacement du ressort à diaphragme (25) dû à l'actionneur (30) est augmenté pour amener les dents de crémaillère (84a) et les dents d'engagement de crémaillère (83a) à se séparer lorsque le plateau de pression (24) s'écarte du volant (21) dans une mesure telle que la poursuite du déplacement axial du plateau de pression est limitée par le moyen de butée (24b) et que le ré-engagement des dents d'engagement de crémaillère (83a) se fait avec un ensemble différent et suivant des dents de crémaillère (84a).

2. Ensemble d'embrayage et mécanisme d'ajustement selon la revendication 1, dans lesquels la crémaillère (84) comporte un ensemble de dents de came (84b) sur un côté opposé au côté portant les dents de crémaillère (84a) l'ensemble de dents de came (84b) étant engrenées avec des dents de came coopérantes (85a) d'un moyen de came (85) fixé au plateau de pression (24), les dents de came coopérantes (84b, 85a) agissant pour communiquer à la crémaillère (84) une composante latérale de déplacement sur la circonférence du plateau de pression (24) lorsque la crémaillère (84) est déplacée dans la direction qui l'écarte du plateau de pression (24).

3. Ensemble d'embrayage et mécanisme d'ajustement selon la revendication 2, dans lequel la composante latérale du déplacement de la crémaillère (84) est à l'intérieur de la plage d'un demi pas et d'un pas complet des dents de crémaillère (84a).

4. Ensemble d'embrayage et mécanisme d'ajustement selon la revendication 3, dans lesquels le déplacement axial et latéral de la crémaillère est contraint et limité par une partie de retenue (84c) de la crémaillère (84).

5. Ensemble d'embrayage et mécanisme d'ajustement selon la revendication 4, dans lesquels le moyen de commande (40) commande l'actionneur (30) de telle sorte que :
lorsque la condition prédéterminée n'est pas satisfaite, la valeur du déplacement de l'élément d'ajustement en coin (82) dans la direction axiale par rapport au plateau de pression (24) est inférieure à la valeur de déplacement dans la direction axiale requise pour.libérer complètement l'engagement entre les dents d'engagement de crémaillère (83a) et les dents de crémaillère (84a), et
lorsque la condition prédéterminée est satisfaite, la valeur de déplacement de l'élément d'ajustement en coin (82) dans la direction axiale par rapport au plateau de pression (24) est supérieure ou égale à la valeur de déplacement dans la direction axiale requise pour libérer complètement l'engagement entre les dents d'engagement de crémaillère (83a) et les dents de crémaillère (84a).

6. Ensemble d'embrayage et mécanisme d'ajustement selon l'une quelconque des revendications précédentes, comprenant en outre un élément de libération d'engagement (89) dont une première extrémité est reliée avec possibilité de rotation au niveau d'une surface périphérique de l'élément d'ajustement en coin (82) et l'autre extrémité est conçue pour venir jusqu'en contact avec une face du plateau de pression (24) au niveau du côté du ressort à diaphragme (25), et l'élément de libération d'engagement (89) comprend une protubérance (89a) entre ladite première extrémité de l'élément de libération d'engagement (89) et l'autre extrémité de celui-ci, la protubérance (89a) étant dressée dans la direction axiale par rapport au plateau de pression (24) vers le ressort à diaphragme (25) et venant jusqu'en contact avec un capot d'embrayage (22) en même temps que le déplacement du plateau de pression (24) dans la direction axiale est limité par le moyen de butée (24b), où l'élément de libération d'engagement (89) est tourné autour de ladite première extrémité lorsque la protubérance (89a) vient jusqu'en contact avec le capot d'embrayage (22) et l'élément d'ajustement en coin (82) est écarté de la crémaillère (84) lorsque l'autre extrémité de l'élément de libération d'engagement (89) vient jusqu'en contact avec ladite face du plateau de pression (24) au niveau du côté du ressort à diaphragme (25).

7. Ensemble d'embrayage et mécanisme d'ajustement selon l'une quelconque des revendications 1 à 6, dans lesquels la condition prédéterminée est satisfaite lorsqu'une valeur absolue de la différence entre une position de référence d'ajustement (AKI) et une position complètement embrayée (KKI) du plateau de pression (24) est supérieure à une valeur de seuil prédéterminée (L).

8. Ensemble d'embrayage et mécanisme d'ajustement selon l'une quelconque des revendications 1 à 6, dans lesquels la condition prédéterminée est satisfaite lorsqu'une valeur absolue de la différence entre une position de référence d'ajustement (AKI) et une position complètement embrayée (KKI) du plateau de pression (24) est supérieure à une valeur de seuil prédéterminée (L) et que la vitesse de rotation (N_{E}) du volant (21) est supérieure à une première vitesse de rotation prédéterminée (α) représentant un régime de ralenti du moteur et est plus petite qu'une seconde vitesse prédéterminée (β) représentant un régime élevé du moteur.
